# EUROPEAN PATENT SPECIFICATION

(11) **EP 1 594 331 B1**
(45) Date of publication and mention of the grant of the patent: **23.04.2008**
(21) Application number: 05008972.1
(22) Date of filing: 23.04.2005
(51) Int. Cl.: H04Q 7/38

(54) **Method for terminal assisted coordinated interference avoidance in a radio communication system**
Verfahren zur endgerätunterstützten koordinierten Vermeidung von Interferenzen in einem Funkkommunikationssystem
Procédé pour éviter des interférences de façon coordonnée et assistée par terminal mobile dans un système de communication radio

(30) Priority: 04.05.2004 EP 04291153
(43) Date of publication of application: 09.11.2005
(73) Proprietor: Alcatel Lucent, 75008 Paris (FR)
(72) Inventor: Gerlach, Christian Georg, Dr., 71254 Ditzingen (DE)
(74) Representative: Brose, Gerhard

(56) References cited:
- GB-A- 2 358 326
- US-A1- 2002 102 941
- US-A1- 2002 147 017
- US-B1- 6 456 847

## Description

The present invention relates to wireless communications systems, and more particularly, to a method for terminal assisted coordinated interference avoidance in digital radio communication systems employing multiple sub-carriers.

Communication systems employing many sub-carriers, such as those that employ OFDM technology are currently used for the transmission of high-speed digital radio and television signals, e.g. Digital Audio Broadcasting (DAB) and Digital Video Broadcasting Terrestrial transmission mode (DVB-T) systems. Also, OFDM has become a widely accepted standard high bit rate transmission technique for the realization of wide-band air interfaces for wireless access to current local area networks (LAN), e.g. HiperLAN and IEEE WLAN standard systems. And, in the same way, the 3^{rd} Generation Partnership Project (3GPP), for the standardization of high-speed broadband wireless mobile communication systems, is recently considering the application of OFDM techniques for the air interface communication between the radio area network (RAN) and the user equipment (UE).

OFDM is sometimes called multi-carrier or discrete multi-tone modulation where the transmitted data is split into a number of parallel data streams, each one used to modulate a separate sub-carrier. In an OFDM system, the broadband radio channel is subdivided into a plurality of narrow-band sub-channels or sub-carriers being independently modulated with e.g. QPSK, 16 QAM, 64 QAM or higher modulation order allowing higher data rate per sub-carrier.

In general, a wireless communication system supporting a wireless communication service comprises a radio access network communicating via an air interface with the user terminals. More particularly, the radio access network comprises a plurality of base stations controlled by a radio network controller (RNC), the base stations being in charge of communicating with the user terminals which are located inside their cell service area.

As already well known in such cellular structures, generally the user terminal roams from one origin cell area to a destination cell area. At a point when the terminal approaches the border of its origin cell service area, and where the two neighbor cells overlap, a common CS (circuit-switched) or PS (packet-switched) service can substantially deteriorate due to neighbor cell interference. In order to increase the quality of the service received by the terminal in such interference areas, so called "soft handover" methods have been developed. When the user terminal moves away from this overlapping region and into the destination cell area, a "handover" process begins, by which the terminal releases the origin serving channels and continues communicating with the destination base station.

In CDMA systems for example, a soft handover procedure is used in which the user terminal establishes a communication channel with multiple base stations serving that overlapping area. When a terminal, served by the origin base station, approaches said base stations cell boundary, it measures the strongest interfering neighboring cell and after reporting gets allocated from the RNC via the base station an additional (different) code for that destination base station. The information then goes from the RNC over both (or more) base stations to the terminal and is combined there after demodulation and despreading.

A soft handover system and method for a multiple sub-carrier communication system is described in European Patent Application EP 0 902 551. The soft handover system provides for synchronized multiple sub-carrier transmission such that the delay differences between the multiple sub-carrier transmissions from the different base stations arriving at the mobile unit are within a guard time. The mobile unit receives, in such soft handover state, downlink signals with identical data content from the different base stations.

Document US 2002/0102941 describes a method for interference avoidance in which a user terminal moves in a first cell to a service overlapping region with a second cell. The terminal measures the received pilot signals and sends the mobile radio network information about the strength of reception of the respective base stations. Based on the terminal information and if a handover is needed, the mobile radio network assigns a new frequency of the same base station (if the base station of the second cell is of another operator) or of the base station of the other cell (if the base station of the second cell is of the same operator).

It is the object of the present invention to provide a method for improving the service quality for a user terminal receiving a radio communications service at a radio cell service area border in a wireless cellular communication system using multi-carrier transmission technology.

The object is achieved, according to the invention, by a method for terminal assisted coordinated interference avoidance according to claim 1, a mobile radio network according to claim 12 and a network element according to claim 14.

Advantageous configurations of the invention emerge from the dependent claims, the following description and the drawings. For example, it is seen advantageous that, by using the proposed invention, a more efficient use of the radio resources is done, specially for terminals located in the cell border region, and that the cell throughput can be increased. Also advantageous is that downlink interference in cell border areas is reduced thus improving both the quality of service experienced by the user and the coverage of the base station service. Another advantage is that, fast automated repeat request (ARQ) mechanisms such as hybrid automated repeat request (HARQ) can be used for packet traffic.

An embodiment example of the invention is now explained with the aid of Figures 1 to 5.
Fig. 1 shows an example of conventional sub-carrier mapping to user channels into an OFDM time-frequency grid.
Fig. 2 illustrates a block diagram of a conventional OFDM mobile communications system including the network and the user terminals.
Fig. 3 shows a method for terminal assisted coordinated interference avoidance according to the invention.
Fig. 4 shows an exemplary time-frequency pattern, consisting of a number of different frequency sub-bands that change over the time, which can be assigned to a terminal for coordinated interference avoidance according to the invention.
Fig. 5 shows exemplary time-frequency patterns, allocating the same sub-carriers over the time, which can be assigned to a terminal for coordinated interference avoidance according to the invention.

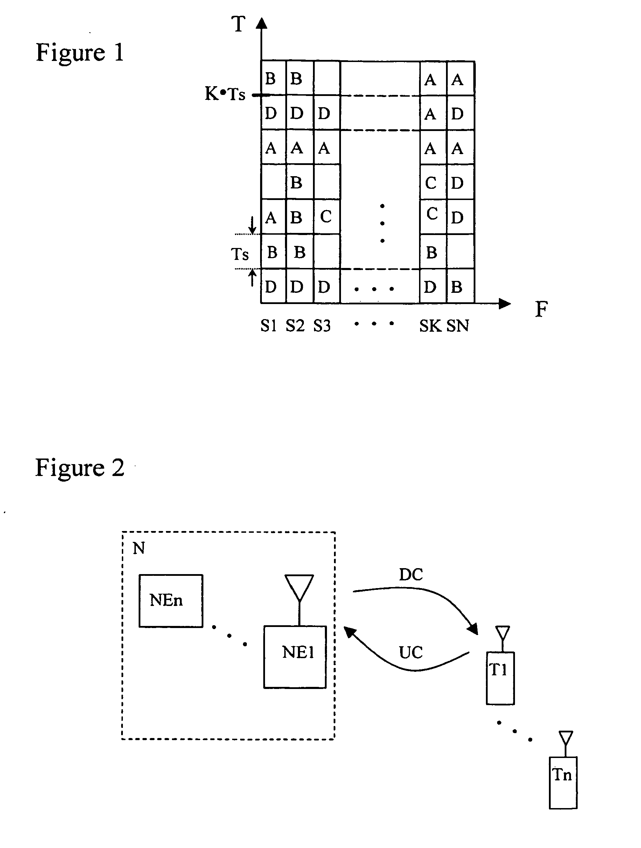

Figure 1 shows an exemplary allocation of sub-carriers S1 to SN to four user channels A, B, C and D in the OFDM time-frequency (T-F) grid.

OFDM offers the possibility to flexibly allocate one or more sub-carriers S1 to SN to one user or one logical channel A, B, C or D to control the data rate for this user channel. Since this can change also over time in a TDMA system (e.g. with a change period of K symbol periods Ts e.g. a period of 2ms), we have a 2-dimensional resource allocation grid, hereinafter referred as T-F grid, as indicated in Figure 1.

Some of the time-frequency grid locations may not be available for data transmission, because they are used for carrying pilot or signaling information. User assignment of remaining locations can be done based on frequency or time or a combination of both.

Figure 2 shows a block diagram of a mobile communications system in which a mobile radio network N, including a plurality of network elements NE1 to NEn, and a plurality of user terminals T1 to Tn exchange data information via an air interface downlink channel DC and an uplink channel UC using multi-carrier modulation schemes, at least in the downlink, such as OFDM. The network elements NE1 to NEn can be for example base stations, radio network controllers, core network switches, or any other communication elements which are generally used for wireless mobile communications.

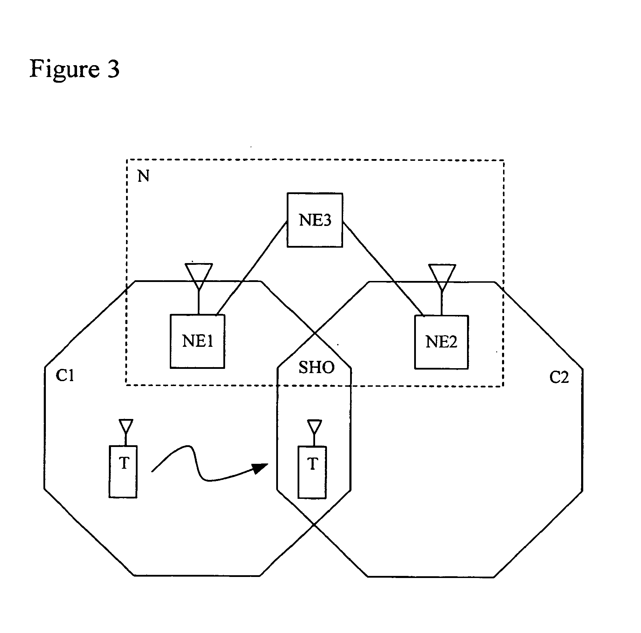

Figure 3 illustrates a method for terminal assisted coordinated interference avoidance according to the invention in a "soft handover-like" scenario comprising a terminal T moving from a first cell service area C1, covered by a first network element NE1, to a service overlapping "soft handover" region SHO, in which a second cell service area C2, covered by a neighbor network element NE2, is also available. Generally the service overlapping soft handover region SHO is located close to the cell border. Both network elements NE1 and NE2 which communicate via the air interface with terminal T will be hereinafter referred to as base stations and the network element NE3 in charge or supervising said base stations will be hereinafter referred as the radio network controller.

According to the invention the network N OFDM communication channel is designed so that pilot and, if needed, also signaling information channels can be received by the terminal T in parallel. This is achieved by assigning to each cell C1 and C2 pilots and, if needed, signaling in an interleaving non-overlapping manner, with pilot and signaling symbols having higher energy as the data. The terminal T can thus receive at least two pilot channels and, if needed, also two signaling channels in parallel, one for each cell service area overlapping in the soft handover region SHO. In the example of figure 3 the terminal T receives two pilot and possibly two signaling channels, one from the origin base station NE1 and another from the neighbor base station NE2.

The possibility to additionally receive two signaling channels in parallel is only needed if the terminal needs to communicate with the origin base station (NE1) and interfering base station (NE2) in parallel. This would be necessary in case the origin base station (NE1) and interfering base station (NE2) negotiate and decide alone without a radio network controller (NE3) about reservation and assignment of the time-frequency group for communication between the base stations and the terminal T.

Also according to the invention, the mobile radio network N partitions the OFDM T-F grid in a number of orthogonal, non-overlapping T-F patterns and combines them in a number of T-F groups, i.e., each T-F group consisting of a number of T-F patterns. The mobile radio network N also assigns each terminal one of said T-F groups for communication. Lets assume, for example, that the terminal T of figure 3 is scheduled on a determined T-F group.

When the terminal T moves to the cell border, inside the "soft handover" region SHO, it measures the pilot signal from the interfering neighbor base stations in that area and signals to the mobile radio network N information about the strength of reception from these and its origin base stations NE1 and NE2. Based on that information, the mobile radio network N tries to reserve and/or assign to terminal (T) the same T-F group in the origin base station NE1 and at least one of the interfering base stations NE2 involved in the interference scenario with the terminal T. For the reservation and assignment of the T-F group, the mobile radio network N takes into account factors such as the available T-F patterns or T-F groups, load situation in all involved cells, the service type, priority and quality of service the terminal is receiving from the network. It is therefore also possible that based on the available time-frequency patterns a new time-frequency group may be constructed and afterwards reserved.

At this point, in case, for example, where the terminal T receives a PS service from the network, e.g. involved in an internet session, the mobile radio network N may decide to coordinate interference by reducing the power transmitted by the interfering base stations NE2 in the T-F group associated to the terminal T, so that interference is sufficiently reduced.

The power will be reduced in the interfering base stations, for the reserved T-F group, to a level in which no substantial interference for the reception of data from the origin base station NE1 is created or just reduced to zero. Since in this T-F group the main interference came from the neighbor base stations NE2, said power reduction improves the signal-to-interference ratio (SIR) so that, even at the "soft handover" region SHO, i.e. at the cell border or beyond, the terminal T can be served only by the origin base station NE1. The neighbor base stations NE2 can still use this T-F group to schedule other terminals in their cells C2 but only with reduced power. These could be, e.g. terminals near to said base station antennas (in the inner circle of the cell C2) that strongly receive the signals from that base station NE2.

In order to average interference for user terminals in neighboring cells that are not using coordination in the "soft handover" overlapping region SHO and are therefore not scheduled on coordinated T-F groups, in a preferred embodiment of the invention the time-frequency pattern or time-frequency group assignments to these terminals are periodically changed, e.g. every change period of a number K of OFDM symbols, in a random or pseudo random manner. This shapes the produced inter-cell interference more evenly over all time frequency patterns. In an alternative solution with the same aim the T-F groups that are used for terminals in uncoordinated transmissions may be constructed in different cells differently, that is, comprising different time-frequency patterns. Thus usage of one uncoordinated group e.g. in a cell C1 affects only few time-frequency patterns of another uncoordinated group in the neighborcell C2.

An important advantage of the method according to the invention is that it allows the origin base station NE1 alone to schedule the packets for the terminal T, so that the same data does not need to be transmitted from the radio network controller NE3 to other base stations NE2 in order to serve the terminal T as was done in the first soft handover-like method. Further, since no other base station besides the origin base station NE1 is involved in the transmission of data packets to terminal T, this allows that efficient fast automated repeat request (ARQ) mechanisms such as hybrid automated repeat request (HARQ), which allows the receiver to inform the transmitter that certain packets were either not received or corrupted, can be used for retransmission of said corrupted packets from the origin base station NE1 to the terminal T.

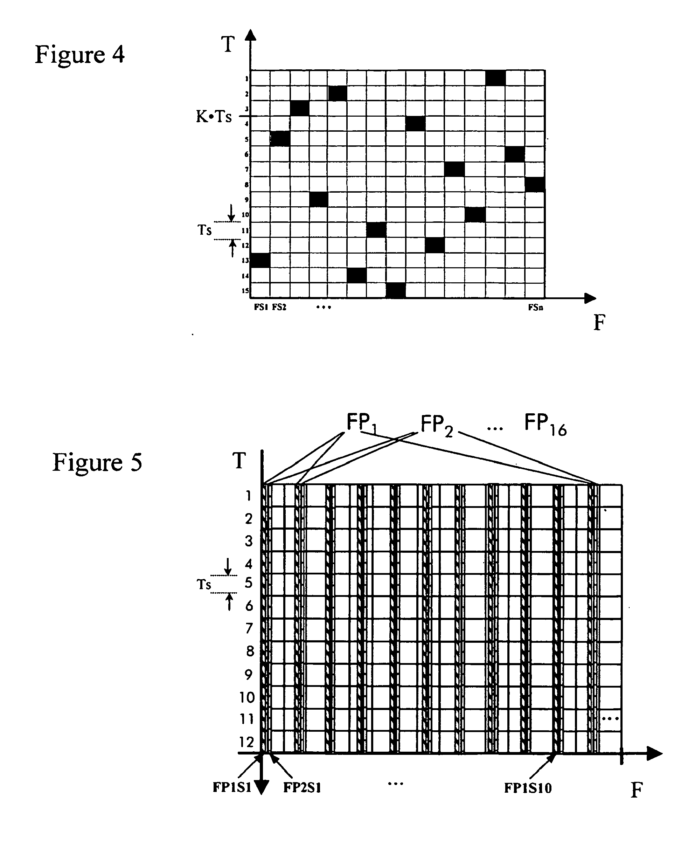

Fig. 4 shows one out of 15 possible T-F patterns in which the OFDM T-F grid can be partitioned, consisting of 15 different sub-carrier frequency sub-bands FS1 to FS15, each sub-band having 40 sub-carriers, and in which the frequency sub-bands are changed over the time.

One or more of such T-F patterns can be grouped to form a T-F group which can be assigned to a terminal T for communication with the mobile radio network N in a coordinated interference avoidance scenario according to the invention. This means that the usage of these T-F patterns in the invention requires time-synchronized base stations to guarantee orthogonality between different patterns if used by different base stations.

Fig. 5 shows another possibility of partitioning the OFDM T-F grid according to the invention. The figure shows two FP1 and FP2 out of 16 possible T-F patterns allocating always the same sub-carrier frequency sub-bands over the time. Because of the constant allocation of frequency sub-bands over the time these T-F patterns can be denoted just as frequency patterns.

The partitioning of the OFDM T-F grid so that the OFDM communication channel is designed so that two pilot channels can be received in parallel according to the invention will be hereinafter described by way of an example solution. For example, an OFDM system employing 704 sub-carriers, not considering the direct current(DC)-carrier, in a 5 MHz band and a number K=12 of OFDM symbols in a period Ts of 2 ms is looked at.

The pilot and signaling information can be placed every 12^{th} sub-carrier such as on the numbers 0, 12, 24, 36, 48, 60, 72 etc. up to 696. So, for example, every even OFDM symbol the sub-carriers 0, 24, 48, 72 etc. carry pilot information and the others 12, 36, 60, etc. signaling information while every odd OFDM symbol the sub-carriers 12, 36, 60, etc. carry pilot information and the others 0, 24, 48, etc. the signaling. In a neighboring cell, say C2, the pilot/signaling sub-carriers are shifted by one in the frequency direction such as 1, 13, 25, 37, 49, 61, 73, etc. up to 697. This configuration allows 12 shifts until the original locations are reached again. Thus 12 different interleaving non-overlapping pilot/signaling patterns are possible and can be distributed in an area so that neighboring cells never use the same pilot/signaling sub-carriers.

Since 16 x 44=704 then 16 frequency patterns FP1 to FP16 can be defined consisting of 44 sub-carriers each. The 44 sub-carriers can be placed, for example, in 11 frequency strips FPnS1 to FPnS11 spread across the frequency axis while each strip FPnSn contains 4 adjacent sub-carriers as indicated in Figure 5. The distance between strips FPnSn of the same frequency pattern FPn is then 16 x 4=64 sub-carriers, so, for example, the first frequency pattern FP1 contains the sub-carriers 0 to 3 allocated in its first frequency strip FP1 S1, 64 to 67 allocated in its second frequency strip FP1S2, 128 to 131 in the third frequency strip FP1S3,etc. According to the partition explained above, then each frequency pattern FP1 to FP16 contains at most 4 pilot or signaling sub-carriers in all its locations independent of the shift of the pilot pattern. So for data transmission there are always 40 of the 44 sub-carriers remaining in 12 OFDM symbols giving a total rate per each 2 ms block of 12 x 40 =480 complex sub-carrier symbols (480 QAM symbols) usable for data transmission.

Each basic frequency pattern (FP1 to FP16) occupies the same locations in all cells independent of the cell specific pilot pattern and further contains sufficient place in each pattern to accommodate for the specific sending cell pilot positions leaving at least always the basic number of time-frequency locations for the basic channel data rate of 480 complex sub-carrier symbols of such a pattern, so a basic Frequency pattern gets no interference from the sending cell pilots and just interference from neighboring cells with different pilot pattern and only maximally as much as amounts to the overhead place of 4 sub-carriers x 12 OFDM symbols left for sending pilot locations i.e. the difference between the total place of the Frequency pattern (44x12) and the basic number of time-frequency locations (40x12) for the basic channel data rate.

Said frequency patterns can be grouped in T-F groups which can be assigned to a terminal T for communication with the mobile radio network N.

An advantage of the use of frequency patterns according to the invention is that, the base stations NE1 and NE2 do not need to be time synchronized, since the frequency pattern usage and the method for coordinated interference avoidance is not connected to a time-frame structure e.g. as shown in Figure 4. This is a very desirable feature since time synchronization of all base stations in a mobile radio network N is a substantial effort that is now advantageously avoided.

For the sake of generalization, it shall be understood, that although for the explanation of the present invention an OFDM modulation scheme has been used, the above proposals can in principle as well be adapted to any multi-carrier modulation scheme apart from OFDM.

It shall also understood that means to carry out the coordinated interference avoidance method herein described can be located anywhere in the mobile radio network N, that is, in a network element NE such as a base station or a radio network controller or by means of a radio resource manager entity, inside or outside the network elements NE, said means being implemented in a hardware and/or software form.

## Claims

1. Method for terminal assisted coordinated interference avoidance in a radio communication system employing multi-carrier techniques in which a user terminal (T) moves from a first cell service area (C1), covered by a first base station (NE1), to a service overlapping region (SHO), in which at least a second cell service area (C2), covered by the second base station (NE2), is also available, the method comprising:
- designing a multi-carrier communication channel so that the terminal (T) receives at least two pilot signals, from at least two base stations (NE1, NE2), in parallel,
- the mobile radio network (N) partitioning a multi-carrier time-frequency grid in a number of orthogonal, non-overlapping time-frequency patterns, grouping them in time-frequency groups, where a group contains at least one of said time-frequency patterns, and assigning the user terminal (T) one of said time-frequency groups for communication,
- the terminal (T) measuring the received pilot signals and signaling to the mobile radio network (N) information about the strength of reception from these base stations (NE2, NE1),
- based on the terminal (T) information and network criteria, the mobile radio network (N) assigning a second time-frequency group for coordinated interference communication with the terminal (T),
- the mobile radio network (N) sending data to the terminal (T) only from the first base station (NE1) using said second time-frequency group and reducing the power transmitted by at least one neighbour base station (NE2) in said second time-frequency group assigned to the terminal (T).

2. The method for coordinated interference avoidance of claim 1 **characterized in that** the second time-frequency group for coordinated interference communication with the terminal (T) is the same time-frequency group already used for communication between the terminal (T) and the first base station (NE1) prior to the terminal movement inside the service overlapping region (SHO).

3. The method for coordinated interference avoidance of claim 1 **characterized in that** the second time-frequency group for coordinated interference communication with the terminal (T) is a different time-frequency group from the one used for communication between the terminal (T) and the first base station (NE1) prior to the terminal movement inside the service overlapping region (SHO).

4. The method for coordinated interference avoidance of claims 2 or 3 **characterized in that** the at least two base stations (NE1, NE2) involved in interference coordination receive and/or exchange information about the second. time-frequency group reserved and/or assigned for coordinated interference communication with the terminal (T).

5. The method for coordinated interference avoidance of claim 1 **characterized in that** the at least two base stations (NE1, NE2) involved in interference coordination are not time synchronized.

6. The method for coordinated interference avoidance of claim 1 **characterized in that** the mobile radio network (N) further uses an ARQ mechanism with the terminal (T) to reschedule packets that were received in error when sent from the first base station (NE1) to the terminal (T).

7. The method of claim 1 **characterized in that** the multi-carrier communication channel is further designed so that the terminal (T) additionally receives at least two signaling channels in parallel.

8. The method of claim 1 **characterized in that** the reservation and/or assignment of the second time-frequency group for coordinated interference communication between the mobile radio network (N) and the terminal (T) is done by the origin base station (NE1), and/or an interfering neighbor base station (NE2) and/or a radio network controller (NE3).

9. The method of claim 1 **characterized in that** for the reservation and/or assignment of the second time-frequency group for coordinated interference communication, the mobile radio network (N) takes into account factors such as the available time-frequency patterns or groups, load situation in all involved cells, service type, priority and quality of service the terminal is receiving from the network.

10. The method of claim 1 **characterized in that** time-frequency group assignments to terminals not involved in coordinated interference communication are periodically changed in a random or pseudo random manner.

11. The method of claim 1 **characterized in that** the mobile radio network (N) partitions the multi-carrier time-frequency grid in a number of orthogonal, non-overlapping frequency patterns (FP1 to FP16) that use no frequency hopping.

12. A mobile radio network (N) **characterized in that** it comprises means for partitioning an OFDM time-frequency grid in a number of orthogonal, non-overlapping time-frequency patterns, and grouping them in time-frequency groups, where a time-frequency group contains at least one of said time-frequency patterns, and assigning a user terminal (T) one of said time-frequency groups for communication; means for receiving signaling information from the terminal (T) about strength of reception measurements on cell pilot signals, means for analyzing said information and for reserving and/or assigning a second time-frequency group for coordinated interference second communication for the terminal (T); and means for transmitting in said time-frequency group only from a base station (NE1) and reducing the power transmitted in said second time-frequency group from a neighbor base station (NE2).

13. The mobile radio network (N) of claim 12 **characterized in that** it further comprises means for carrying out an ARQ mechanism with the terminal (T) to reschedule packets that were received in error when sent from the base station (NE1) to the terminal (T).

14. A network element (NE) **characterized in that** it comprises means for partitioning an OFDM time-frequency grid in a number of orthogonal, non-overlapping time-frequency patterns, and grouping them in time-frequency groups, where a T-F group contains at least one of said time-frequency patterns, and assigning a user terminal (T) one of said T-F groups for communication; means for receiving signaling information from the terminal (T) about strength of reception measurements on cell pilot signals; means for analyzing said information and for reserving and/or assigning a time-frequency group for coordinated interference communication for the terminal (T); and means for reducing the power transmitted in said second time-frequency group.

## Patentansprüche

1. Verfahren zur endgeräteunterstützten koordinierten Vermeidung von Interferenzen in einem Funkkommunikationssystemen unter Verwendung von Mehrträgertechniken, bei welchen sich ein Benutzerendgerät (T) von einem ersten Zellenbereich (C1), der von einer ersten Basisstation (NE1) abgedeckt wird, in eine Dienstüberlappungszone (SHO) bewegt, in welcher mindestens ein zweiter zellenbereich (C2), der von einem benachbarten Netzwerkelement (NE2) abgedeckt wird, ebenfalls verfügbar ist, wobei das Verfahren darin besteht, dass
- ein Mehrträger-Kommunikationskanal eingerichtet wird, so dass das Endgerät (T) mindestens zwei Pilotsignale von mindestens zwei Basisstationen (NE1, NE2) parallel empfängt,
- das Mobilfunknetz (N) eine Mehrträger-Zeit-Frequenz-Ebene in eine Reihe von orthogonalen und nicht überlappenden Zeit-Frequenz-Mustern partitioniert und diese zu Zeit-Frequenz-Gruppen zusammenfasst, wobei eine Gruppe mindestens eines der besagten Zeit-Frequenz-Muster enthält, und dem Benutzerendgerät (T) eine der besagten Zeit-Frequenz-Gruppen für die Kommunikation zuweist,
- das Benutzerendgerät (T) die empfangenen Pilotsignale misst und dem Mobilfunknetz (N) Informationen über die Empfangsfeldstärke von diesen Basisstationen (NE1, NE2) signalisiert,
- das Mobilfunknetz (N) anhand der Informationen des Endgeräts (T) sowie von Netzwerkkriterien eine zweite Zeit-Frequenz-Gruppe zur koordinierten Vermeidung von Interferenzen mit dem Endgerät (T) zuweist,
- das Mobilfunknetz (N) unter Verwendung der besagten zweiten Zeit-Frequenz-Gruppe Daten nur von der ersten Basisstation (NE1) an das Endgerät (T) sendet und die Sendeleistung mindestens einer benachbarten Basisstation (NE2) in der besagten zweiten Zeit-Frequenz-Gruppe reduziert, die dem Endgerät (T) zugewiesen ist.

2. Verfahren zur koordinierten Vermeidung von Interferenzen gemäß Anspruch 1, **dadurch gekennzeichnet, dass** die zweite Zeit-Frequenz-Gruppe für die interferenzkoordinierte Kommunikation mit dem Endgerät (T) dieselbe Zeit-Frequenz-Gruppe ist, die bereits vor der Bewegung des Endgeräts in die Dienstüberlappungszone (SHO) hinein für die Kommunikation zwischen dem Endgerät (T) und der ersten Basisstation (NE1) verwendet wurde.

3. Verfahren zur koordinierten Vermeidung von Interferenzen gemäß Anspruch 1, **dadurch gekennzeichnet, dass** die zweite Zeit-Frequenz-Gruppe für die interferenzkoordinierte Kommunikation mit dem Endgerät (T) eine andere Zeit-Frequenz-Gruppe als diejenige ist, die vor der Bewegung des Endgeräts in die Dienstüberlappungszone (SHO) hinein für die Kommunikation zwischen dem Endgerät (T) und der ersten Basisstation (NE1) verwendet wurde.

4. Verfahren zur koordinierten Vermeidung von Interferenzen gemäß den Ansprüchen 2 oder 3, **dadurch gekennzeichnet, dass** die an der Koordination von Interferenzen beteiligten mindestens zwei Basisstationen (NE1, NE2) Informationen über die zweite Zeit-Frequenz-Gruppe empfangen und/oder austauschen, die für die interferenzkoordinierte Kommunikation mit dem Endgerät (T) reserviert und/oder zugewiesen ist.

5. Verfahren zur koordinierten Vermeidung von Interferenzen gemäß Anspruch 1, **dadurch gekennzeichnet, dass** die an der Koordination von Interferenzen beteiligten mindestens zwei Basisstationen (NE1, NE2) nicht synchronisiert sind.

6. Verfahren zur koordinierten Vermeidung von Interferenzen gemäß Anspruch 1, **dadurch gekennzeichnet, dass** das Mobilfunknetz (N) ferner einen ARQ-Mechanismus gegenüber dem Endgerät (T) anwendet, um fehlerhaft empfangene Pakete, die von der ersten Basisstation (NE1) zum Endgerät (T) gesendet wurden, erneut einzuplanen.

7. Verfahren gemäß Anspruch 1, **dadurch gekennzeichnet, dass** der Mehrträger-Kommunikationskanal ferner so ausgelegt ist, dass das Endgerät (T) zusätzlich mindestens zwei Signalisierungskanäle parallel empfängt.

8. Verfahren gemäß Anspruch 1, **dadurch gekennzeichnet, dass** die Reservierung und/oder Zuweisung der zweiten Zeit-Frequenz-Gruppe für die interferenzkoordinierte Kommunikation zwischen dem Mobilfunknetz (N) und dem Endgerät (T) von der Ausgangs-Basisstation (NE1) und/oder einer störenden benachbarten Basisstation (NE2) und/oder einem Funknetz-Controller (NE3) bewerkstelligt wird.

9. Verfahren gemäß Anspruch 1, **dadurch gekennzeichnet, dass** das Mobilfunknetz (N) bei der Reservierung und/oder Zuweisung der zweiten Zeit-Frequenz-Gruppe für die interferenzkoordinierte Kommunikation Faktoren wie die verfügbaren T-F-Muster oder -Gruppen, die Auslastungssituation in allen beteiligten Zellen, den Diensttyp sowie die Priorität und Qualität des Dienstes, den das Endgerät vom Netzwerk empfängt, berücksichtigt.

10. Verfahren gemäß Anspruch 1, **dadurch gekennzeichnet, dass** Zuweisungen von Zeit-Frequenz-Gruppe zu Endgeräten, die nicht an der interferenzkoordinierten Kommunikation beteiligt sind, periodisch zufällig oder pseudo-zufällig geändert werden.

11. Verfahren gemäß Anspruch 1, **dadurch gekennzeichnet, dass** das Mobilfunknetz (N) die Mehrträger-Zeit-Frequenz-Ebene in eine Reihe von orthogonalen und nicht überlappenden Frequenzmustern (FP1 bis FP16) partitioniert, bei denen kein Frequenzsprungverfahren angewandt wird.

12. Mobilfunknetz (N), **dadurch gekennzeichnet, dass** dieses Mittel zum Partitionieren einer OFDM-Zeit-Frequenz-Ebene in eine Reihe von orthogonalen und nicht überlappenden Zeit-Frequenz-Mustern beinhaltet und diese zu Zeit-Frequenz-Gruppen zusammenfasst, wobei eine Zeit-Frequenz-Gruppe mindestens eines der besagten Zeit-Frequenz-Muster enthält, und einem Benutzerendgerät (T) eine der besagten Zeit-Frequenz-Gruppen für die Kommunikation zuweist, dass es ferner Mittel zum Empfangen von Signalisierungsinformationen vom Endgerät (T) über Messungen der Empfangsfeldstärke von Zellen-Pilotsignalen beinhaltet, dass es weiterhin Mittel zum Analysieren der besagten Informationen und/oder zum Zuweisen einer zweiten Zeit-Frequenz-Gruppe für die interferenzkoordinierte Kommunikation mit dem Endgerät (T) beinhaltet, und dass es Mittel zum Senden in der besagten zweiten Zeit-Frequenz-Gruppe nur von einer Basisstation (NE1) sowie zum Reduzieren der von einer benachbarten Basisstation (NE2) gesendeten Leistung in der besagten zweiten Zeit-Frequenz-Gruppe beinhaltet.

13. Mobilfunknetz (N) gemäß Anspruch 12, **dadurch gekennzeichnet, dass** dieses ferner Mittel zur Durchführung eines ARQ-Mechanismus gegenüber dem Endgerät (T) beinhaltet, um fehlerhaft empfangene Pakete, die von der ersten Basisstation (NE1) zum Endgerät (T) gesendet wurden, erneut einzuplanen.

14. Netzelement (NE), **dadurch gekennzeichnet, dass** dieses Mittel zum Partitionieren einer OFDM-Zeit-Frequenz-Ebene in eine Reihe von orthogonalen und nicht überlappenden Zeit-Frequenz-Mustern beinhaltet und diese zu Zeit-Frequenz-Gruppen zusammenfasst, wobei eine T-F-Gruppe mindestens eines der besagten Zeit-Frequenz-Muster enthält, und einem Benutzerendgerät (T) eine der besagten T-F-Gruppen für die Kommunikation zuweist, dass es ferner Mittel zum Empfangen von Signalisierungsinformationen vom Endgerät (T) über Messungen der Empfangsfeldstärke von Zellen-Pilotsignalen beinhaltet, dass es weiterhin Mittel zum Analysieren der besagten Informationen und/oder zum Zuweisen einer zweiten Zeit-Frequenz-Gruppe für die interferenzkoordinierte Kommunikation mit dem Endgerät (T) beinhaltet, und dass es Mittel zum Reduzieren der gesendeten Leistung in der besagten zweiten Zeit-Frequenz-Gruppe beinhaltet.

## Revendications

1. Procédé permettant d'éviter des interférences de façon coordonnée et assistée par terminal dans un système de radiocommunication employant des techniques à porteuses multiples dans lequel un terminal utilisateur (T) se déplace d'une première zone de service cellulaire (C1), couverte par une première station de base (NE1), à une zone de chevauchement de services (SHO), dans lequel au moins une seconde zone de service cellulaire (C2), couverte par la seconde station de base (NE2), est également disponible, le procédé comprenant :
- la conception d'un canal de communication à porteuses multiples de sorte que le terminal (T) reçoive au moins deux signaux pilotes, d'au moins deux stations de base (NE1, NE2), parallèlement,
- la division par le réseau radio mobile (N) d'une grille temps-fréquence à porteuses multiples en un certain nombre de motifs temps-fréquence orthogonaux et sans chevauchement, leur répartition en groupes temps-fréquence, où un groupe contient au moins l'un desdits motifs temps-fréquence, et l'affectation au terminal utilisateur (T) de l'un desdits groupes temps-fréquence pour la communication,
- la mesure par le terminal (T) des signaux pilotes reçus et le signal au réseau radio mobile (N) des informations sur la puissance de réception de ces stations de base (NE2, NE1),
- sur la base des informations du terminal (T) et des critères du réseau, l'affectation par le réseau radio mobile (N) d'un second groupe temps-fréquence pour la communication des interférences de façon coordonnée avec le terminal (T),
- l'envoi par le réseau radio mobile (N) des données au terminal (T) seulement depuis la première station de base (NE1) à l'aide dudit second groupe temps-fréquence et la réduction de la puissance transmise par au moins une station de base voisine (NE2) dans ledit second groupe temps-fréquence affecté au terminal (T).

2. Procédé permettant d'éviter des interférence de façon coordonnée selon la revendication 1, **caractérisé en ce que** le second groupe temps-fréquence pour la communication des interférences de façon coordonnée avec le terminal (T) est le groupe temps-fréquence déjà utilisé pour la communication entre le terminal (T) et la première station de base (NE1) avant le déplacement du terminal à l'intérieur de la zone de chevauchement de services (SHO).

3. Procédé permettant d'éviter des interférences de façon coordonnée selon la revendication 1, **caractérisé en ce que** le second groupe temps-fréquence pour la communication des interférences de façon coordonnée avec le terminal (T) est un groupe temps-fréquence différent de celui utilisé pour la communication entre le terminal (T) et la première station de base (NE1) avant le déplacement du terminal à l'intérieur de la zone de chevauchement de services (SHO).

4. Procédé permettant d'éviter des interférences de façon coordonnée selon les revendications 2 ou 3, **caractérisé en ce qu'**au moins deux stations de base (NE1, NE2) participant à la coordination des interférences reçoivent et/ou échangent des informations sur le second groupe temps-fréquence réservé et/ou affecté pour la communication des interférences de façon coordonnée avec le terminal (T).

5. Procédé permettant d'éviter des interférences de façon coordonnée selon la revendication 1, **caractérisé en ce que** les au moins deux stations de base (NE1, NE2) participant à la coordination des interférence n'ont pas une synchronisation temporelle.

6. Procédé permettant d'éviter des interférences de façon coordonnée selon la revendication 1, **caractérisé en ce que** le réseau radio mobile (N) utilise en outre un mécanisme ARQ avec le terminal (T) pour réordonnancer les paquets qui ont été reçus par erreur quand ils ont été envoyés de la première station de base (NE1) au terminal (T).

7. Procédé selon la revendication 1, **caractérisé en ce que** le canal de communication à porteuses multiples est en outre conçu de sorte que le terminal (T) reçoive en outre au moins deux canaux de signalisation parallèlement.

8. Procédé selon la revendication 1, **caractérisé en ce que** la réservation et/ou l'affectation du second groupe temps-fréquence pour la communication des interférences de façon coordonnée entre le réseau radio mobile (N) et le terminal (T) est effectuée par la station de hase d'origine (NE1), et/ou une station de base voisine (NE2) qui interfère et/ou un contrôleur de réseau radio (NE3).

9. Procédé selon la revendication 1, **caractérisé en ce que** pour la réservation et/ou l'affectation du second groupe temps-fréquence pour la communication des interférences de façon coordonnée, le réseau radio mobile (N) tient compte de facteurs tels que les motifs ou groupes temps-fréquence disponibles, la situation de charge dans toutes les cellules concernées, le type de service, la priorité et la qualité de service que le terminal reçoit du réseau.

10. Procédé selon la revendication 1, **caractérisé en ce que** les affectations de groupes temps-fréquence participant à la communication des interférences de façon coordonnée sont périodiquement changées d'une façon aléatoire ou pseudo aléatoire.

11. Procédé selon la revendication 1, **caractérisé en** cc que le réseau radio mobile (N) divisc la grille temps-fréquence à porteuses multiples en un certain nombre de motifs de fréquences orthogonales et sans chevauchement (FP1 à FP16) qui n'utilisent aucun saut de fréquence.

12. Réseau radio mobile (N) **caractérisé en ce qu'**il comprend des moyens permettant de diviser un groupe temps-fréquence OFDM en un certain nombre de motifs temps-fréquence orthogonales et sans chevauchement, et de les répartir en groupes temps-fréquence, où un groupe temps-fréquence contient au moins l'un desdits motifs temps-fréquence, et d'affecter à un terminal utilisateur (T) l'un desdits groupes temps-fréquence pour la communication ; des moyens permettant de recevoir des informations de signalisation du terminal (T) sur la puissance des mesures de réception sur les signaux pilotes des cellules, des moyens permettant d'analyser lesdites informations et de réserver et/ou d'affecter un second groupe temps-fréquence pour la communication des interférences de façon coordonnée pour le terminal (T) ; et des moyens permettant de transmettre audit second groupe temps-fréquence seulement depuis une station de base (NE1) et de réduire la puissance transmise dans ledit second groupe temps-fréquence depuis une station de base voisine (NE2).

13. Réseau radio mobile (N) selon la revendication 12, **caractérisé en ce qu'**il comprend en outre des moyens permettant de réaliser un mécanisme ARQ avec le terminal (T) pour réordonnancer les paquets qui ont été reçus par erreur quand ils ont été envoyés depuis la station de base (NE1) au terminal (T).

14. Elément réseau (NE) **caractérisé en ce qu'**il comprend des moyens permettant de diviser une grille temps-fréquence OFDM en un certain nombre de motifs temps-fréquence orthogonaux et sans chevauchement, et de les répartir en groupes temps-fréquence, où un groupe T-F contient au moins l'un desdits motifs temps-fréquence, et d'affecter à un terminal utilisateur (T) l'un desdits groupes T-F pour la communication ; des moyens permettant de recevoir des informations de signalisation du terminal (T) sur la puissance des mesures de réception sur les signaux pilotes des cellules, des moyens permettant d'analyser lesdites informations et de réserver et/ou d'affecter un second groupe temps-fréquence pour la communication des interférences de façon coordonnée pour le terminal (T) ; et des moyens permettant de réduire la puissance transmise dans ledit second groupe temps-fréquence.
